# EUROPÄISCHE PATENTANMELDUNG

(11) **EP 3 462 599 A1**
(43) Veröffentlichungstag der Anmeldung: **03.04.2019**
(21) Anmeldenummer: 17193785.7
(22) Anmeldetag: 28.09.2017
(51) Int. Cl.: H02P 6/185, H02P 29/024

(54) **ELEKTRISCHE MASCHINE**

(71) Anmelder: Siemens Aktiengesellschaft, 80333 München (DE)
(72) Erfinder: Geier, Ingo, 90556 Cadolzburg (DE); Kellner, Sven Ludwig, 91052 Erlangen (DE); Rattaro, Luca Silvio, 91052 Erlangen (DE); Weigel, Thilo, 90427 Nürnberg (DE)

(57) **Zusammenfassung**

Bei einem Verfahren zum Betrieb einer elektrischen Maschine (1) wird ein erstes Prüfsignal (2) in die elektrische Maschine (1) eingespeist, wobei ein erstes Antwortsignal (3) gemessen wird, wobei eine erste Zustandsgröße (4) für den Rotor (5) der elektrischen Maschine (1) abhängig vom ersten Prüfsignal (2) ermittelt wird, wobei eine zweite Zustandsgröße (6) für den Rotor (5) der elektrischen Maschine (1) ermittelt wird, wobei die erste Zustandsgröße (4) und die zweiten Zustandsgröße (6) gemeinsam ausgewertet werden. Hierfür ist ein Antriebssystem (8) vorgesehen, welches zumindest einen Stromrichter (7) zum Antrieb einer elektrischen Maschine (1) aufweist, wobei der Stromrichter (7) zur Einprägung eines ersten Prüfsignals (2) in die elektrische Maschine (1) vorgesehen ist.

## Beschreibung

Die Erfindung betrifft eine elektrische Maschine, insbesondere eine Synchronmaschine, bzw. deren Betrieb.

Der Betrieb einer Synchronmaschine ist in vielen Anwendungsbereichen sicher durchzuführen. Zum sicheren Betrieb der Synchronmaschine wird beispielsweise ein Messsystem, wie z.B. ein Geber, verwendet. Mit einem Geber kann eine Vielzahl von Sicherheitsfunktionen realisiert werden. Für den sicheren Betrieb von elektrischen Maschinen, wie insbesondere einer Synchronmaschine, sind häufig Sicherheitsfunktionen zur Begrenzung von Drehzahlen, Geschwindigkeiten, Achspositionen usw. erforderlich. Hierzu werden Frequenzumrichter mit integrierten Sicherheitsfunktionen eingesetzt, oder auch Sicherheits-SPSen, Drehzahlwächter usw. Für die zugehörige Sensorik zur Erfassung von Achspositionen oder Drehwinkeln an Spindeln werden größtenteils Positionsgeber mit Sin/Cos-Schnittstelle verwendet. Bei diesen Produkten gibt es zunehmend sichere Ausführungen, die für den Einsatz in einem bestimmten Performance Level (PL) oder SIL1 vorgesehen sind.

Elektrische Maschinen, wie Synchronmaschinen, können auch geberlos betrieben werden. Aus der DE 197 03 248 A1 ist beispielsweise ein Verfahren und eine Vorrichtung zur Bestimmung einer Rotorwinkelgeschwindigkeit einer geberlosen, feldorientiert betriebenen Drehfeldmaschine bekannt.

Aus der EP 2 023 479 B1 ist ein System zur nahtlosen Geschwindigkeits- und/oder Lageermittlung einschließlich Stillstand bei einem Permanentmagnet-Läufer einer elektrischen Maschine bekannt. Es ist ein Verfahren zur Ermittlung einer elektrischen Antriebs-Geschwindigkeit und/oder -Lage aus einer Messung eines mehrphasigen Statorstroms beschrieben.

Aus der EP 2 226 929 A1 ist ein Plausibilitäts-Überwachungssystem für Bewegungsmessungen an einer elektrischen Antriebseinrichtung bekannt. Bei einem Verfahren zur Überwachung einer Bewegungsmessung an einer elektrischen Antriebseinrichtung auf Plausibilität, wird die Bewegungsmessung eines Gebers überwacht. Anhand von Messungen von elektrischen Strömen in der Antriebseinrichtung werden ein oder mehrere Schätzwerte für die Lage, Geschwindigkeit und/oder Beschleunigung der Antriebseinrichtung erzeugt, wobei der oder die Schätzwerte auf Entsprechung mit einem oder mehreren, aus den Geber-Ausgangssignalen erzeugten Messwerten verglichen werden.

Eine Aufgabe der Erfindung ist es ein alternatives Betriebsverfahren für eine elektrische Maschine anzugeben, wobei es sich bei dem alternativen Betriebsverfahren insbesondere um ein sicheres Verfahren handelt.

Eine Lösung der Aufgabe gelingt bei einem Verfahren nach Anspruch 1 bzw. bei einem Antriebssystem nach Anspruch 12. Ausgestaltungen ergeben sich auch nach den Ansprüchen 2 bis 11 bzw. 13 bis 15.

Bei einem Verfahren zum Betrieb einer elektrischen Maschine, welche insbesondere eine Synchronmaschine ist, wird ein erstes Prüfsignal in die elektrische Maschine eingespeist. Ein erstes Antwortsignal wird gemessen und/oder ermittelt, wobei eine erste Zustandsgröße für den Rotor der elektrischen Maschine abhängig vom ersten Prüfsignal, also insbesondere abhängig vom ersten Antwortsignal ermittelt wird. Es wird eine zweite Zustandsgröße für den Rotor der elektrischen Maschine ermittelt, wobei die erste Zustandsgröße und die zweiten Zustandsgröße gemeinsam ausgewertet werden. Das erste Antwortsignal ist insbesondere abhängig vom ersten Prüfsignal. Das Antwortsignal ist beispielsweise eine Impulsantwort, eine Sprungantwort, etc. Das Antwortsignal basiert insbesondere auf der Messung einer Spannung und/oder eines Stromes der elektrischen Maschine. Die elektrische Maschine wird mittels eines Stromrichters gespeist. Mittels des Stromrichters wird das Prüfsignal in die elektrische Maschine gespeist. Die erste Zustandsgröße, wie beispielsweise eine Rotordrehzahl oder eine Rotorposition, wird insbesondere mathematisch auf Basis der gemessenen Spannungen und/oder Ströme ermittelt. Auch die zweite Zustandsgröße, wie beispielsweise eine Rotordrehzahl oder eine Rotorposition, wird insbesondere mathematisch auf Basis der gemessenen Spannungen und/oder Ströme ermittelt. Durch die Ermittlung der ersten Zustandsgröße und der zweiten Zustandsgröße kann ohne die Verwendung eines Geber-Messsystem ein sicherer Betrieb der elektrischen Maschine ermöglicht werden, da beispielsweise eine sichere Ermittlung der Rotordrehzahl und/oder der Rotorposition möglich ist. So kann auch bei einer geberlosen Regelung einer elektrischen Maschine, wie z.B. einer Synchronmotoren, bis zum Stillstand ein sicherer Betrieb gewährleistet werden. Insbesondere können geberlose Synchronmotoren als lagegeregelte Achsen betrieben werden, wobei sich über Algorithmus sowohl die Position des Rotors als auch die Position einer Mechanik errechnen lässt.

Das Prüfsignal kann als ein Eingangssignal für ein System, wie einen elektrische Maschine betrachtet werden, um ein Ausgangssignal, also ein Antwortsignal, zu erhalten. Eingangssignale zur Generierung von Antwortsignalen können auch als Testsignal bezeichnet werden.

In einer Ausgestaltung des Verfahrens wird für die Ermittlung der zweiten Zustandsgröße ein zweites Prüfsignal in die elektrische Maschine eingespeist, wobei ein zweites Antwortsignal gemessen und/oder ermittelt wird, wobei die zweite Zustandsgröße abhängig vom zweiten Antwortsignal ermittelt wird.

In einer Ausgestaltung des Verfahrens kann als zweites Antwortsignal auch eine Sollgröße einer Transvektorregelung der elektrischen Maschine verwendet werden.

Das zweite Prüfsignal kann sich in einer Ausgestaltung des Verfahrens zum ersten Prüfsignal zumindest durch eines der folgenden Kriterien unterscheiden:
- das erste Prüfsignal ist zum zweiten Prüfsignal zeitlich versetzt;
- das erste Prüfsignal weist eine zum zweiten Prüfsignal unterschiedliche Amplitude auf oder
- das erste Prüfsignal weist eine zum zweiten Prüfsignal unterschiedliche Signalfrequenz auf.

In einer Ausgestaltung des Verfahrens erfolgt die Ermittlung eines Zustandes der elektrischen Maschine in zwei getrennten Kanälen. Durch die zweikanalige Ermittlung des Zustandes, wie z.B. der Rotordrehzahl oder der Rotorposition, kann ein sicherer Betrieb der elektrischen Maschine ermöglicht werden. Die Zweikanaligkeit kann beispielsweise durch zwei Prüfsignale mit jeweils einem Antwortsignal erreicht werden, aber auch mit einem Prüfsignal und zwei daraus resultierenden Antwortsignalen. Für eine sichere Positionierung ist insbesondere eine sichere Lageinformation über zwei getrennte Kanäle zu berechnen. Diese kann z.B. über eine sichere Auswertung der Spannungen und/oder Ströme der elektrischen Maschine über zwei getrennte Kanäle ermittelt werden. Beispielhafte kann in einer Ausgestaltung für beide Kanäle das gleiche sichere Prüfsignal verwendet werden.

In einer Ausgestaltung des Verfahrens werden zur Ermittlung eines bestimmten Zustandes der elektrischen Maschine zwei Zustandsgrößen verwendet, welche geberlos ermittelt werden. Damit kann der eine Zustand der elektrischen Maschine über zwei Kanäle geberlos sicher ausgewertet werden. Wird auf einen Geber verzichtet ergeben sich Kostenvorteile. Ein geberloser Betrieb der elektrischen Maschine kann diese auch robuster machen und deren Zuverlässigkeit erhöhen.

In einer Ausgestaltung des Verfahrens erfolgt eine Messung des Antwortsignals, also z.B. die Messung einer Spannung und/oder eines Stromes, in einer höheren Frequenz bzw. Abtastrate (z.B. zumindest 50% höher), als dies für die Regelung der elektrischen Maschine notwendig ist, wenn die gemessene Spannung und/oder der gemessene Strom auch als Istwert für die Regelung der elektrischen Maschine verwendet wird.

In einer Ausgestaltung des Verfahrens weist das Prüfsignal eine um 50% höhere Frequenz auf als die maximale Frequenz eines Sollwertes der elektrischen Maschine. Ein Sollwert der elektrischen Maschine ist beispielsweise, eine Rotordrehzahl, eine Strangspannung, eine Spannungszeiger, ein Stromzeiger, ein Flusszeiger, etc.

In einer Ausgestaltung des Verfahrens werden das erste Prüfsignal und das zweite Prüfsignal zur Ermittlung des gleichen Zustandes des Rotors verwendet, also z.B. zur Ermittlung der Rotorposition und/oder der Rotordrehzahl.

In einer Ausgestaltung des Verfahrens wird, wenn durch die Regelung der elektrischen Maschine kein ausreichend hohes Spannungssignal vorhanden ist, also insbesondere bei der beim Positionieren so wichtigen Drehzahl Null, ein sicheres Einprägen des Prüfsignals (insbesondere Testimpulse) durchgeführt, wobei das Prüfsignal bzw. die Testimpulse auch von der Regelung zur Berechnung des Rotorlagesignals verwendet werden.

In einer Ausgestaltung des Verfahrens das erste Prüfsignal und/oder das zweite Prüfsignal ein überlagertes Signal. Das überlagerte Signal wird einem Signal überlagert, welches zur Regelung der elektrischen Maschine verwendet wird. Die Regelung der elektrischen Maschine ist insbesondere eine feldorientierte Regelung. Beispiele für ein derartiges Signal sind ein Stromsollwert und/oder ein Spannungssollwert und/oder ein Flusssollwert. Diese Sollwerte können insbesondere in einem der in der Regelung verwendeten Koordinatensysteme vorliegen, also z.B. einem αβ-Koordinatensystem oder einem d/q-Koordinatensystem.

In einer Ausgestaltung des Verfahrens ist das erste Prüfsignal und/oder das zweite Prüfsignal ein rotorfestes Signal. Dabei kommt das d/q-Koordinatensystem zu Tragen. In einer Ausgestaltung des Verfahrens ist das erste Prüfsignal und/ oder das zweite Prüfsignal ein statorfestes Signal. Dabei kommt das αβ-Koordinatensystem zu Tragen.

In einer Ausgestaltung des Verfahrens ist das erste Prüfsignal ein statorfestes Prüfsignal und das zweite Prüfsignal ein rotorfestes Prüfsignal.

In einer Ausgestaltung des Verfahrens ist das erste Antwortsignal ein statorfestes Antwortsignal und das zweite Antwortsignal ein rotorfestes Antwortsignal.

In einer Ausgestaltung des Verfahrens wird in einem ersten Kanal der Zustand (z.B. die Rotorlage) der elektrischen Maschine basierend auf einem statorfesten Prüfsignal berechnet und in einem zweiten Kanal basierend auf einem rotorfesten Prüfsignal berechnet. Diese Zweikanaligkeit dient dem sicheren Betrieb der elektrischen Maschine.

In einer Ausgestaltung des Verfahrens ist das erste Prüfsignal zum zweiten Prüfsignal orthogonal. Demnach werden zwei unterschiedliche Kanäle über orthogonal zueinander stehende Prüfsignale gebildet.

In einer Ausgestaltung des Verfahrens ist der zu ermittelnde Zustand der elektrischen Maschine eine Position, eine Geschwindigkeit und/oder eine Beschleunigung.

In einer Ausgestaltung des Verfahrens ist das erste Prüfsignal und/oder das zweite Prüfsignal momentenbildend.

In einer Ausgestaltung des Verfahrens sind das erste Prüfsignal und/oder das zweite Prüfsignal momentenneutral. Momentenneutral bedeutet, dass das Prüfsignal die Position und/oder die Bewegung des Rotors der elektrischen Maschine nicht beeinflusst.

In einer Ausgestaltung des Verfahrens ist die elektrische Maschine eine geberlose elektrische Maschine. Mittels des beschriebenen Verfahrens ist eine sichere Auswertung der Messwerte und Berechnung der Lage und Drehzahl auch mit geeigneten Formelwerken und/oder Algorithmen möglich.

In einer Ausgestaltung des Verfahrens ist die elektrische Maschine eine Synchronmaschine.

In einer Ausgestaltung des Verfahrens wird für das erste Prüfsignal und/oder das zweite Prüfsignal ein Impulssignal verwendet.

Mit einer der Ausgestaltungen des Verfahrens ist ein geberlose sichere Positionierung und Überwachung von Achsen möglich. Dazu gehören z.B. sowohl geschwindigkeitsbezogene Überwachungsfunktionen, die keinen Lageabsolutwert voraussetzen (unter anderem SOS), als auch Funktionen, die einen sicheren Lageabsolutwert benötigen.

Ein Antriebssystem weist zumindest einen Stromrichter zum Antrieb einer elektrischen Maschine auf, wobei der Stromrichter zur Einprägung eines ersten Prüfsignals in die elektrische Maschine vorgesehen ist. Das Antriebssystem kann zur Durchführung der hier beschriebenen Verfahren vorgesehen sein. Das Antriebssystem weist insbesondere auch eine elektrische Maschine auf, welche mittels des Stromrichters mit elektrischer Energie versorgt werden kann.

In einer Ausgestaltung des Antriebssystems ist der Stromrichter zur Einprägung eines zweiten Prüfsignals in die elektrische Maschine vorgesehen.

In einer Ausgestaltung des Antriebssystems ist zur Erzeugung des ersten Prüfsignals und/oder des zweiten Prüfsignals zumindest ein ASIC mit einem PLIP-Steuersatz vorgesehen ist. Das sichere Einprägen des Prüfsignals, wie insbesondere Prüfimpulse (Testimpulse), kann zum Beispiel durch entsprechende Hardware-Implementierung der Prüfimpulse (Testimpulse) geschehen. Dies ist beispielsweise mit ASICs im Stromrichter möglich, welche einen PLIP-Steuersatz aufweisen.

In einer Ausgestaltung des Antriebssystems erfolgt eine sichere Verarbeitung und Aufbereitung von Messwerten z.B. mit entsprechenden Sicherheitsvorkehrungen auf gemeinsamen oder getrennten ASICs oder FPGAs. Gegebenenfalls werden unterschiedliche Kanäle verwendet, wie dies hier auch beschrieben ist.

Mittels des beschriebenen Verfahrens bzw. des beschriebenen Antriebssystems kann durch das sichere Einprägen der Prüfsignale auf einen Geber für die elektrische Maschine verzichtet werden. Hinzu kommt eine darauf aufbauende sichere Auswertung über zwei getrennte Kanäle. Die Implementierung kann wie beschrieben über unterschiedliche Wege geschehen. So kann insbesondere ein robustes und preiswertes Positionieren von Achsen erreicht werden.

Mit Hilfe der beschriebenen Verfahren und/oder der beschriebenen Vorrichtungen lassen sich sicherheitsrelevante Funktionen ausfüllen, wie z.B. eine sichere Absolutlage.

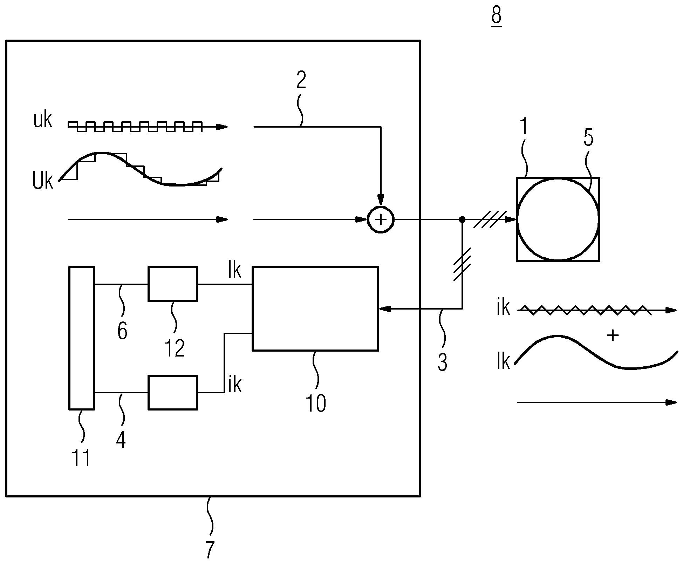

Die Erfindung sowie weitere Ausgestaltungen der Erfindung gemäß den Merkmalen der Unteransprüche werden im folgenden anhand eines schematisch dargestellten Ausführungsbeispiels in der Zeichnung näher erläutert, ohne dass dadurch eine Beschränkung der Erfindung auf dieses Ausführungsbeispiel erfolgt.

Dargestellt ist ein Antriebssystem 8, welches zumindest einen Stromrichter 7 zum Antrieb einer elektrischen Maschine 1 aufweist, wobei der Stromrichter 7 zur Einprägung eines ersten Prüfsignals 2 in die elektrische Maschine 1 vorgesehen ist. Die elektrische Maschine 1 weist einen Rotor 5 auf. Das erste Prüfsignal 2 weist Spannungssprünge uₖ auf, welche auf eine momentenbildende Spannung uₖ aufmoduliert sind. Gemäß eines Verfahrens zum Betrieb der elektrischen Maschine 1 wird das erstes Prüfsignal 2 in die elektrische Maschine 1 eingespeist, wobei ein erstes Antwortsignal 3 gemessen wird, wobei eine erste Zustandsgröße 4 für den Rotor 5 der elektrischen Maschine 1 abhängig vom ersten Prüfsignal 2 in einer Auswerteeinrichtung 9 ermittelt wird. Vor der Auswertung wird das Antwortsignal iₖ mittels eines Filters 10 herausgefiltert. Eine zweite Zustandsgröße 6 für den Rotor 5 der elektrischen Maschine 1 wird beispielsweise mittels einer Regelung 12 für die elektrische Maschine 1 ermittelt, wobei die erste Zustandsgröße 4 und die zweiten Zustandsgröße 6 gemeinsam in einer weiteren Auswerteeinrichtung 11 ausgewertet werden. Über den Filter 10 kann auch der sich durch die Spannung uₖ ausbildende Strom Iₖ ermittelt werden. Bei einer sensorlosen Regelung mit Testpulsauswertung werden - wie gezeigt - der Grundwellenspannung uₖ (die Grundwellenspannung treibt die Maschine an) additiv kleine Spannungsimpulse uₖ überlagert. Aus der Korrelation dieser Anregung mit den erzeugten Impulsantworten der Ströme Iₖ und iₖ kann dann die Information der Läuferlage und Drehzahl gewonnen werden.

## Patentansprüche

1. Verfahren zum Betrieb einer elektrischen Maschine (1) wobei ein erstes Prüfsignal (2) in die elektrische Maschine (1) eingespeist wird, wobei ein erstes Antwortsignal (3) gemessen wird, wobei eine erste Zustandsgröße (4) für den Rotor (5) der elektrischen Maschine (1) abhängig vom ersten Prüfsignal (2) ermittelt wird, wobei eine zweite Zustandsgröße (6) für den Rotor (5) der elektrischen Maschine (1) ermittelt wird, wobei die erste Zustandsgröße (4) und die zweiten Zustandsgröße (6) gemeinsam ausgewertet werden.

2. Verfahren nach Anspruch 1, wobei für die Ermittlung der zweiten Zustandsgröße ein zweites Prüfsignal in die elektrische Maschine (1) eingespeist wird, wobei ein zweites Antwortsignal gemessen wird, wobei die zweite Zustandsgröße abhängig vom zweiten Antwortsignal ermittelt wird.

3. Verfahren nach Anspruch 1 oder 2, wobei das erste Prüfsignal (2) und das zweite Prüfsignal zur Ermittlung des gleichen Zustandes des Rotors (5) verwendet werden.

4. Verfahren nach einem der Ansprüche 1 bis 3, wobei das erste Prüfsignal (2) und/oder das zweite Prüfsignal ein überlagertes Signal ist.

5. Verfahren nach einem der Ansprüche 1 bis 4, wobei das erste Prüfsignal (2) und/oder das zweite Prüfsignal ein rotorfestes Signal ist oder ein statorfestes Signal ist.

6. Verfahren nach einem der Ansprüche 1 bis 5, wobei das erste Prüfsignal (2) zum zweiten Prüfsignal orthogonal ist.

7. Verfahren nach einem der Ansprüche 1 bis 6, wobei der Zustand eine Position, eine Geschwindigkeit und/oder eine Beschleunigung ist.

8. Verfahren nach einem der Ansprüche 1 bis 7, wobei das erste Prüfsignal (2) und/oder das zweite Prüfsignal momentenbildend ist.

9. Verfahren nach einem der Ansprüche 1 bis 8, wobei die elektrische Maschine (1) eine geberlose elektrische Maschine ist.

10. Verfahren nach einem der Ansprüche 1 bis 9, wobei die elektrische Maschine (1) eine Synchronmaschine ist.

11. Verfahren nach einem der Ansprüche 1 bis 10, wobei für das erste Prüfsignal (2) und/oder das zweite Prüfsignal ein Impulssignal verwendet wird.

12. Antriebssystem (8), welches zumindest einen Stromrichter (7) zum Antrieb einer elektrischen Maschine (1) aufweist, wobei der Stromrichter (7) zur Einprägung eines ersten Prüfsignals (2) in die elektrische Maschine (1) vorgesehen ist.

13. Antriebssystem (8) nach Anspruch 12, wobei der Stromrichter (7) zur Einprägung eines zweiten Prüfsignals in die elektrische Maschine (1) vorgesehen ist.

14. Antriebssystem (8) nach Anspruch 12 oder 13, wobei zur Erzeugung des ersten Prüfsignals (2) und/oder des zweiten Prüfsignals zumindest ein ASIC mit einem PLIP-Steuersatz vorgesehen ist.

15. Antriebssystem (8) nach einem der Ansprüche 12 bis 14, wobei der Stromrichter (7) zur Durchführung eines Verfahrens nach einem der Ansprüche 1 bis 11 vorgesehen ist.
